# EUROPEAN PATENT SPECIFICATION

(11) **EP 4 450 478 B1**
(45) Date of publication and mention of the grant of the patent: **04.11.2026**
(21) Application number: 23763267.4
(22) Date of filing: 17.02.2023
(51) Int. Cl.: B22D 41/54, C04B 35/103, C04B 35/482, B22D 41/50

(54) **REFRACTORY PRODUCT FOR USE IN CONTINUOUS CASTING**
FEUERFESTES PRODUKT ZUR VERWENDUNG IM STRANGGUSS
PRODUIT RÉFRACTAIRE DESTINÉ À ÊTRE UTILISÉ EN COULÉE CONTINUE

(30) Priority: 02.03.2022 JP 2022032065
(43) Date of publication of application: 23.10.2024
(73) Proprietor: Krosakiharima Corporation, Kitakyushu-shi, Fukuoka 806-8586 (JP)
(72) Inventor: MATSUMOTO, Shigefumi, Kitakyushu-shi, Fukuoka 806-8586 (JP); LI, Ling, Kitakyushu-shi, Fukuoka 806-8586 (JP); TAKAMI, Kouhei, Kitakyushu-shi, Fukuoka 806-8586 (JP); MORIKAWA, Katsumi, Kitakyushu-shi, Fukuoka 806-8586 (JP); IGATA, Tetsuo, Kitakyushu-shi, Fukuoka 806-8586 (JP)
(74) Representative: Vossius & Partner Patentanwälte Rechtsanwälte mbB
(86) International application number: PCT/JP2023/005645
(87) International publication number: WO 2023/167008

(56) References cited:
- WO-A1-2009/072216
- JP-A- 2005 144 462
- JP-A- 2005 152 928
- JP-A- 2007 326 110
- JP-A- 2009 221 031
- JP-A- 2011 200 911
- JP-A- 2014 141 381
- JP-A- H01 176 266
- JP-B2- 6 027 676

## Description

### TECHNICAL FIELD

The present invention relates to a zirconia-carbon based (ZrO₂-C based) refractory product for continuous casting and a refractory member such as a nozzle for continuous casting, using the refractory product.

### BACKGROUND ART

A zirconia-carbon based refractory product including a zirconia-graphite based refractory product is frequently applied to a powder-line portion of an immersion nozzle requiring particularly high corrosion resistance, because zirconia as a primary component of the refractory product has excellent corrosion resistance as compared to alumina or silica (see, for example, Patent Document 1).

As described in the Patent Document 1, in order to improve the corrosion resistance of the zirconia-graphite based refractory product, it is effective to reduce the mixing amount of graphite, and increase the amount of zirconia. However, the reduction in the mixing amount of graphite gives rise to a problem that thermal shock resistance is deteriorated.

Patent Document 2 provides a zirconia-carbon-containing refractory comprising aggregate grains; a carbon bond formed between the aggregate grains; 80% by mass or more of a ZrO₂ component; and a carbonaceous material, wherein the total volume of open pores and the carbonaceous material in the structure of the refractory is in the range of 25% to 42% by volume, open pores each having a diameter of 10 µm or more account for 30% or less of the total volume of open pores in the structure of the refractory, and carbonaceous material grains each having a maximum length exceeding 45 µm in the carbonaceous material in the zirconia-carbon-containing refractory account for less than 60% by mass of the total mass of the carbonaceous material except the bonding carbon in the zirconia-carbon-containing refractory.

### CITATION LIST

### [Patent Document]

Patent Document 1: JP 2002-338347A
Patent Document 2: JP 2009-221031A

### SUMMARY OF INVENTION

### [Technical Problem]

In recent years, it has become often the case that a refractory member for continuous casting, such as a nozzle for continuous casting, is used in a state in which preheating is not sufficient or in a non-preheated state. Thus, along with improvement in corrosion resistance, improvement in the thermal shock resistance is desired.

A technical problem to be solved by the present invention is to improve corrosion resistance and thermal shock resistance of a zirconia-carbon based refractory product and a refractory member for continuous casting.

### [Solution to Technical Problem]

The present inventors repeatedly performed experimental tests and studies for improving corrosion resistance and thermal shock resistance of a zirconia-carbon based refractory product. As a result, the present inventors have found that it is essential to control the form of pores inside a refractory product, while achieving densification of the refractory product. The present inventors have also found that for that purpose, the particle size composition (volume percent) of refractory particles in the refractory product is one important control factor, and have come to complete the present invention.

The scope of the present invention is defined by independent claim 1, and further embodiments of the invention are specified in dependent claims 2-5.

### [Advantageous Effects of Invention]

The present invention can improve corrosion resistance and thermal shock resistance of a zirconia-carbon based refractory product and refractory member for continuous casting. This makes it possible to produce excellent durability even in a usage environment in a non-preheated state.

### BRIEF DESCRIPTION OF DRAWINGS

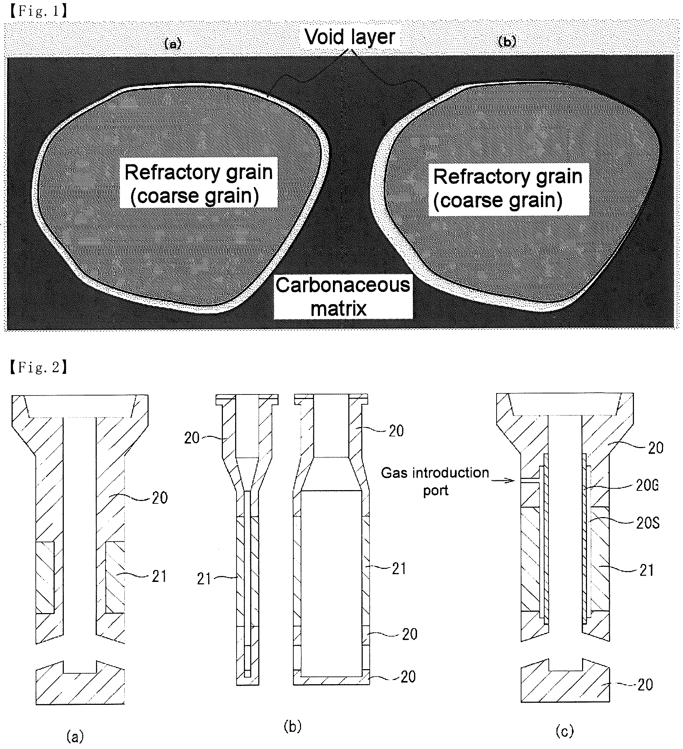

FIG. 1 is a conceptual diagram showing a refractory particle as aggregate, and its surrounding microstructure in a refractory product according to the present invention, wherein: (a) shows an example in which a void layer is formed around the refractory particle to have a shape similar to the outline of the refractory particle, wherein the refractory particle is almost centered (a typical example of the present invention); and (b) shows an example in which a void layer is formed around the refractory particle to have a shape similar to the outline of the refractory particle, wherein the refractory particle is biasedly locate on one side of an inner wall of the void layer (an example of an eccentrically located state which is likely to occur when preparing a sample for microscopic observation).
FIG. 2 is a sectional view showing an example of an immersion nozzle as a form of a refractory member to which the refractory product according to the present invention is applied.
FIG. 3 is a sectional view showing another example of the immersion nozzle as a form of the refractory member to which the refractory product according to the present invention is applied.
FIG. 4 is explanatory diagram showing an example of installation of a refractory member for continuous casting, in an example of a facility for continuous casting of steel.
FIG. 5 is a sectional view showing an example of a long nozzle as a form of the refractory member to which the refractory product according to the present invention is applied.
FIG. 6 is a sectional view showing an example of a lower nozzle as a form of the refractory member to which the refractory product according to the present invention is applied.
FIG. 7 is a sectional view showing another example of the long nozzle as a form of the refractory member to which the refractory product according to the present invention is applied.
FIG. 8 is a sectional view showing an example of a long stopper as a form of the refractory ember to which the refractory product according to the present invention is applied.

### DESCRIPTION OF EMBODIMENTS

As mentioned above, it is essential for solving the aforementioned technical problem to control the form of pores inside a refractory product, while promoting densification of the refractory product. Therefore, the present inventors aspired to a refractory microstructure in which refractory particles having a particle size of greater than 0.3 mm and serving as aggregate are present, independently in a non-continuous manner, in a three-dimensionally continuous, carbon-containing, matrix microstructure (hereinafter referred to as "carbonaceous matrix"), and an approximately continuous void layer is present around each of a plurality of coarse particles at least one of which has the largest particle size among the refractory particles, wherein the approximately continuous void layer has a similar shape to the coarse particle. That is, such a refractory microstructure makes it possible to obtain an effect of allowing thermal expansion of the coarse particle, which contributes largely to thermal expansion of the refractory product, to be absorbed by the approximately continuous void layer around the coarse particle, and consequently allowing the thermal expansion of the coarse particle to apparently disappear. That is, as long as the void layer is present around each coarse particle during the course of heat receiving, the amount of thermal expansion of the refractory product consists mainly of the amount of thermal expansion of the three-dimensionally continuous carbonaceous matrix, so that it becomes possible to lower the thermal expansion of the refractory product

Further, in the present invention, the respective volume percents of refractory particles having a particle size of greater than 0.3 mm (hereinafter referred to as "coarse-fraction refractory particles") and refractory particles having a particle size of 0.045 mm or less (hereinafter referred to as "fine-fraction refractory particles") are limited so as to realize control of the form of pores inside the refractory product as described above, while promoting densification of the refractory product, thereby realizing improvements in corrosion resistance and thermal shock resistance of the refractory product and the refractory member for continuous casting. The following is a more detailed description.

The refractory product according to the present invention contains a free carbon component in an amount of 8% by mass to 16% by mass. Here, the term "free carbon component" means a carbon component composed of a simple carbon component excluding unavoidable impurities, other than a compound including a carbide such as B₄C or SiC, and means any carbon component present in a refractory microstructure, formed when any of various types of organic binders, pitch, tar, or carbon black receives heat, wherein the carbon component may be amorphous or may be crystalline such as graphite, or may have any shape and structure, e.g., may be present in a refractory microstructure in granular form (including fibrous form) or in continuous or discontinuous state without having a specific shape.

If the content of the free carbon component is less than 8% by mass, a three-dimensionally continuous carbonaceous matrix is not formed in the refractory microstructure, and a sufficient expansion lowering effect cannot be obtained. Further, if the content of the free carbon component is less than 8% by mass, formability is deteriorated, and denseness of the refractory product is impaired, resulting in deteriorated corrosion resistance. On the other hand, if the content of the free carbon component exceeds 16% by mass, damage to the carbonaceous matrix due to molten steel, slag, etc., becomes severe, and the amount of wear loss of the refractory product increases, leading to deterioration in corrosion resistance. The content of the free carbon component is preferably 10% by mass to 14% by mass.

In the refractory product according to the present invention, a main component of a remainder other than the free carbon component is a zirconia component, and the content of other component than the free carbon component and the zirconia component (hereinafter referred to simply as "other component") is less than 5% by mass in total. In other words, the refractory product of the present invention contains a zirconia component in an amount of greater than 79% by mass to 92% by mass. As just described, he refractory product according to the present invention contains the zirconia component in an amount of at least 79% by mass, so that it has high corrosion resistance also in term of the basic composition.

As described above, the refractory product according to the present invention may contain the other component in an amount of less than 5% by mass. Specifically, the other component may comprise one or more selected from the group consisting of a magnesia component, a silicon carbide component, a boron carbide component, and a zirconium boride component. The magnesia component reacts with the free carbon component, etc., in the refractory product in the course of heat receiving, and a resulting reaction product or the like provides an advantageous effect of suppressing penetration of the molten steel into the refractory product, thereby improving corrosion resistance. In addition, the silicon carbide component, the boron carbide component, and the zirconium boride component provide an advantageous effect of suppressing oxidation of the free carbon component, etc., in the refractory product. In order to obtain these effects, the refractory product according to the present invention may contain, as the other component, one or more selected from a magnesia component, a silicon carbide component, a boron carbide component, and a zirconium bolide component in a total amount of less than 5% by mass. If the content of the other component is 5% by mass or more in total, the content of the zirconia component is relatively reduced, and thus sufficient corrosion resistance cannot be obtained.

Here, a zirconia raw material serving as a zirconia component source contains a stabilizing component such as CaO, MgO, and Y₂O₃. In the refractory product according to the present invention, the content of the stabilizing component such as CaO, MgO, and Y₂O₃ is included in the content of the zirconia component contains. In other words, the content of the stabilizing component such as CaO, MgO, and Y₂O₃ contained in the zirconia raw material is not included in the content of the other component.

In the refractory product according to the present invention, the content of each of the above-mentioned components is basically identified by ICP emission spectrometry. It should be noted here that in the ICP emission spectrometry, although the stabilizing component such as CaO, MgO, and Y₂O₃ contained in the zirconia raw material cannot be distinguished from the other component, the content of the stabilizing component such as CaO, MgO, and Y₂O₃ contained in the zirconia raw material can be identified in advance, and thus the content of the other component can be identified by subtracting the stabilizing component such as CaO, MgO, and Y₂O₃ contained in the zirconia raw material, from the value identified by the ICP emission spectrometry.

Next, a particle size composition (volume percent) of refractory particles in the refractory product, which is one feature of the present invention, will be described.

In the present invention, the particle size composition (volume percent) of the refractory particles in the refractory product is characterized in that, when a remainder after excluding a composition comprised of the free carbon component from a composition of the refractory product is defined as 100% by volume, the coarse-fraction refractory particles account for 5 % by volume or more, and the fine-fraction refractory particles account for 5% by volume to 40% by volume.

If the coarse-fraction refractory particles account for less than 5 % by volume, the volume percent of the fine-fraction refractory particles or a below-mentioned medium-fraction refractory particles relatively increases, and thus the number of refractory particles in the refractory product increases. This results in a refractory microstructure in which refractory particles are present continuously, leading to a high expansion property. Thus, thermal shock resistance is deteriorated. The upper limit of the volume percent of the coarse-fraction refractory particles is not particularly limited, but from a viewpoint of stably ensuring required properties such as strength and corrosion resistance required as a refractory product for continuous casting, for example, it may be set to, e.g., 60% by volume or less. The volume percent of the coarse-fraction refractory particles is preferably 10% by volume or more, more preferably 10% by volume to 60% by volume. The upper limit of the particle size of the coarse-fraction refractory particles is also not particularly limited, but from the viewpoint of stably ensuring required properties such as strength and corrosion resistance required as a refractory product for continuous casting, it is preferably 3 mm or less, more preferably 1 mm or less. More specifically, in addition to refractory particles having a particle size of greater than 0.3 mm to 1 mm, the refractory product according to the present invention may include refractory particles having a particle size of greater than 1 mm to 3 mm, as the coarse-fraction refractory particles. However, when a remainder t after excluding a composition comprised of the free carbon component from a composition of the refractory product is defined as 100% by volume, the volume percent of the refractory particles having a particle size of greater than 1 mm to 3 mm is preferably 15% by volume or less, more preferably 0% by volume, i.e., it is more preferable that the refractory product does not contain the refractory particles having a particle size of greater than 1 mm to 3 mm.

Further, if the volume percent of the fine-fraction refractory particles is less than 5% by volume, sufficient corrosion resistance cannot be obtained. On the other hand, if the volume percent of the fine-fraction refractory particles exceeds 40% by volume, the number of refractory particles in the refractory product increases. This results in a refractory microstructure in which refractory particles are present continuously, leading to a high expansion property. Thus, thermal shock resistance is deteriorated. Further, if the volume percent of the fine-fraction refractory particles exceeds 40% by volume, formability is deteriorated, and denseness of the refractory product is impaired, resulting in deteriorated corrosion resistance. The volume percent of the fine-fraction refractory particles is preferably 10% by volume to 30% by volume. In the refractory product according to the present invention, the fine-fraction refractory particles are basically present in the carbonaceous matrix.

The above description has been made about the respective volume percents of the coarse-fraction (particle size: greater than 0.3 mm) refractory particles and the fine-fraction (particle size: 0.045 mm or less) refractory particles. The refractory product according to the present invention appropriately includes medium-fraction (particle size: greater than 0.045 mm to 0.3 mm) refractory particles. When a remainder after excluding a composition comprised of the free carbon component from a composition of the refractory product is defined as 100% by volume, the volume percent of the medium-fraction refractory particles is a remainder other than the volume percent of the coarse-fraction refractory particles and the volume percent of the fine-fraction refractory particles, and is preferably 90% by volume or less, more preferably 25% by volume to 85% by volume.

Here, as used in the present invention, the term "particle size of refractory particles" is the size of a sieve mesh when refractory particles are sieved and separated. For example, refractory particles having a particle size of 0.045 mm or less mean refractory particles capable of passing through a sieve having a mesh size of 0.045 mm, and refractory particles having a particle size of greater than 0.3 mm mean refractory particles incapable of passing through a sieve having a mesh size of 0.3 mm.

Next, the microstructure of the refractory product according to the present invention will be described in detail. The basic configuration of the microstructure of the refractory product according to the present invention is a refractory microstructure in which refractory particles having a particle size of greater than 0.3 mm and serving as aggregate are present independently in a non-contiguous manner, in a three-dimensionally continuous carbonaceous matrix, and an approximately continuous void layer is present around each of a plurality of coarse particles at least one of which has the largest particle size among the refractory particles, wherein the approximately continuous void layer has a similar shape to the coarse particle, as described above. Specifically, it is a refractory microstructure in which a total thickness of the approximately continuous void layer across two positions on an interface between the carbonaceous matrix and the coarse particle, located on opposed sides of the void layer is in the range of 0.3% to 3% of the particle size of the coarse particle.

Here, the term "substantially continuous void layer" means a void layer which has an outline enlarged substantially similarly with respect to the outline of the cross-sectional shape of the refractory particle as aggregate, in cross-sectional observation of the refractory particles by a microscope, and defines therein a void in which the refractory particle is present (see FIG. 1 (a)) like a bell's ball. That is, the term does not mean a configuration in which a composition of carbon or the like which hinders thermal expansion of the refractory particle is present inside the void layer, and that areas where two or more refractory particles or a refractory particle and the carbonaceous matrix are in direct contact with each other are randomly present due to unevenness of the void layer or the absence of void.

It should be noted that, in the refractory product according to the present invention, there is a void layer around the entire periphery of each refractory particle as aggregate, i.e., in "a continuous state". However, when it is attempted to verify such a state by microscopic observation, since the refractory particle is present in such a state in which it floats in the void space without being fixed, a part of the surface of the refractory particle is likely to come into contact with surrounding another refractory particle or the carbonaceous matrix (see FIG. 1 (b)). Therefore, the term "approximately continuous" is used in consideration of the actual state in verification. In the present invention, the term "approximately continuous void layer" means that the void layer is actually present around the entire periphery of each refractory particle, but a part of the surface of the refractory particle is likely to be in contact with another refractory particle or the carbonaceous matrix during verification in the form of a microscopic observation sample. However, such a contact area is not in a "coupled or bonded" state to an extent that the refractory particle is fixed. That is, the thermal expansion of the refractory particle is absorbed by such a "substantially continuous void layer", which makes it possible to lower expansion of the refractory product.

From a viewpoint of reducing the amount of thermal expansion of the refractory product, it is preferable that the thickness of the void layer around each refractory particle is set as large as possible, and the void layer is present around each of all refractory particles as aggregate. However, since the void layer around each refractory particle causes deterioration in strength of the refractory product, it is necessary to adjust the thickness of the void layer while taking a balance between the amount of thermal expansion, and the strength, damage or the like.

With regard to the ratio of the thickness of the void layer to the particle size (void layer thickness ratio per particle: MS value (microspace value)), the MS value becomes smaller as the particle size becomes larger, and becomes larger as the particle size becomes smaller. Thus, specifying the MS value of a coarse particle having the largest particle size among all the refractory particles is equivalent to specifying the lower limit of the void layer thickness ratio per particle in the refractory microstructure, so that it allows thermal shock resistance of the refractory product to be roughly evaluated.

Here, the term "MS value" is the ratio of the void layer thickness L between a coarse particle and a carbonaceous matrix (where L is the sum of void layer thicknesses on opposite sides of the particle) to the diameter D of the coarse particle, and is calculated by the following formula: $MS value = \left(L/D\right) \times 100 \left(%\right)$

Specifically, the MS value (%) in the present invention is calculated in the following manner. Through microscopic microstructure observation of a refractory product, ten coarse particles are selected in descending order of particle size, and after drawing the largest circle inscribing the contour (outline) of each of the selected particles, within the plane of the particle, an arbitrary line passing through the center of the circle is drawn. Further, three lines passing through the center of the circle are drawn at a 45-degree pitch using the above arbitrary line as a reference line. That is, in total four lines are drawn per particle. Then, a length (D1, D2, D3, D4) between two contour points of the particle located at opposite ends of each of the four lines is measured, and further the sum (L1, L2, L3, L4) of two thicknesses of a void layer lying in an interface between the particle and the carbonaceous matrix, on the opposite end sides of each of the lines, is measured. Then, MS1, MS2, MS3 and MS4 are calculated by the above formula using the values obtained using the four lines, and an average of the values is calculated as the void layer thickness ratio per particle, i.e., MS value. Respective MS values of the preliminarily selected ten coarse particles are calculated in the above-mentioned manner, and averaged to obtain an MS value of the refractory microstructure.

The reason that an MS value of the refractory microstructure is evaluated by the coarse particles having the largest particle size, i.e., the ten coarse particles selected in descending order of particle size in microscopic microstructure observation of the refractory product is that as the particle size of the particle becomes larger, a change in the volume or length thereof due to thermal expansion becomes larger, and the influence on thermal shock resistance becomes larger. Thus, the MS value serving as an index for adjusting and evaluating thermal shock resistance needs to be calculated based on the coarse particle having the largest particle size in the refractory microstructure. Further, from a similar viewpoint, the above "approximately continuous void layer" in the present invention needs to be present around each of the coarse particles at least one of which has the largest particle size, i.e., around each of the ten coarse particles selected in descending order of particle size in microscopic microstructure observation of the refractory product.

The present inventors have confirmed that in a refractory product containing a free carbon component in an amount of 8% by mass to 16% by mass, and a remainder in which a main component is a zirconia component, the thickness of the void layer around each refractory particle, which has the expansion lowering effect and achieves a good balance in terms of strength, corrosion resistance, and abrasion resistance, is 0.3% to 3.0% in terms of the MS value calculated based on the coarse particles at least one of which has the largest particle size. That is, if the MS value is less than 0.3%, a sufficient expansion lowering effect cannot be obtained. On the other hand, if the MS value exceeds 3.0%, the strength is deteriorated, and the corrosion resistance and the abrasion resistance are also deteriorated. As above, the present invention can significantly improve thermal shock resistance, and provide a refractory product achieving a good balance in terms of strength, corrosion resistance, and abrasion resistance, by forming a refractory microstructure such that an approximately continuous void layer is present around each of a plurality of coarse particles at least one of which has the largest particle size among refractory particles in a refractory product, the approximately continuous void layer having a similar shape to the coarse particle, wherein the total thickness of the substantially continuous void layer across two positions on an interface between a carbon-containing matrix microstructure and the coarse particle located on opposite sides of the void layer is 0.3% to 3.0% of the particle size of the coarse particle.

A control method for such an MS value, i.e., a method of: forming an approximately continuous void layer around each of a plurality of coarse particles at least one of which has the largest particle size among refractory particles in the refractory product, wherein the approximately continuous void layer has a similar shape to the coarse particle; and controlling the thickness of the void layer, is, for example, as follows. The control of the MS value is synonymous with control of thermal expansion rate. Specifically, a larger refractory particle (coarser particle) has a larger amount of thermal expansion in the course of heat treatment, and a difference in thermal expansion between the refractory particle and the carbonaceous matrix becomes prominent. Thus, around such a coarse particle, an approximately void continuous layer (hereinafter also referred to as "MS") having a similar shape to the coarse particle more likely to be formed. On the other hand, since a smaller refractory particle has a smaller amount of thermal expansion, a clear MS is less likely to be formed therearound. Therefore, the control of the MS value, i.e., the control of thermal expansion rate, becomes possible by controlling the particle size composition (volume percent) of the refractory particles in the refractory product. In the present invention, lowed expansion and control thereof can be achieved by, when a remainder after excluding a composition comprised of the free carbon component is defined as 100% by volume, setting the refractory particles having a particle size of greater than 0.3 mm to account for 5% by volume or more, and setting the refractory particles having a particle size of 0.045 mm or less to account for 5% by volume to 40% by volumes. For example, when lower expansion is desired, the volume percent of the refractory particles having a particle size of 0.045 mm or less may be reduced within the above range of the particle size composition (volume percent) to cut off the continuity of the refractory particles in the refractory microstructure, and the volume percent of the refractory particles having a particle size of greater than 0.3 mm may be increased to promote the formation of the MS.

The refractory product according to the present invention combines the above features (the chemical composition, main mineral phase, particle size composition (volume percent) of refractory particles, and refractory microstructure), whereby it is possible to achieve both denseness expressed by an apparent porosity of 16% or less, and low expansion property expressed by the maximum thermal expansion rate up to 1500°C of 0.6% or less. Thus. it is possible to improve corrosion resistance and thermal shock resistance of a refractory product and a refractory member for continuous casting, and allow the refractory product and the refractory member to produce excellent durability even in a usage environment in which they are used in a non-preheated state.

Here, the chemical composition, refractory microstructure, apparent porosity, thermal expansion rate, etc., of the refractory product according to the present invention are basically evaluated based on a sample "after being subjected to heating in a non-oxidizing atmosphere at 1000°C ". The reason is to remove components such as water, organic matter, hydrates, and carbonate compounds, in the refractory material, and stabilize the chemical composition of the refractory product by carbonization of an organic binder component, thereby promoting improvement in analytical accuracy. From this point of view, a heating duration is set to a period to be continued until there is no change in weight due to the heating. However, in a case where the refractory product has been subjected to a heat treatment at a temperature of 1000°C or more, or to a heat treatment at a temperature of 800°C or more depending on the type of volatile component, in a production process of the refractory product, it is possible to perform evaluations of the chemical composition, refractory microstructure, apparent porosity, thermal expansion rate, etc., in a product state after the production.

The refractory product according to the present invention may contain carbon fibers in the carbonaceous matrix. The carbon fibers fill a defective part such as a crack which occurs with contraction of the carbonaceous matrix due to carbonization of an organic binder component, etc., during heating of the refractory product. This promotes densification and reinforcement of the carbonaceous matrix, and improvement in strength of the refractory product. From a viewpoint of sufficiently producing such an effect of improving the strength of the refractory product, the aspect ratio of the carbon fibers is preferably 15 to 200, and the content of the carbon fibers is preferably 5% by mass or less.

The refractory product according to the present invention can be produced by a similar method to a production method for a commonly-used zirconia-carbon based refractory product, as with fabrication of samples for the below-mentioned Examples.

For example, the method comprises: adding a binder to a raw material blend comprising a zirconia raw material, and graphite; kneading a resulting mixture; adjusting the kneaded mixture to a state suitable for shaping; molding the adjusted mixture by CIP (cold Isostatic Press); subjecting a resulting molded body to drying at a temperature of about 300°C or less; and then subjecting the dried body to heat treatment in a non-oxidizing atmosphere at a temperature of about 800°C to about 1200°C.

Next, a refractory member for continuous casting, using the refractory product according to the present invention, will be described. FIG. 2 shows an immersion nozzle which is one form of the refractory member for continuous casting, in a longitudinal section.

FIG. 2(a) shows an example of an immersion nozzle in which the refractory product 21 according to the present invention is applied to a powder-line portion thereof. FIG. 2(a) shows an example of a cylindrical nozzle. However, a nozzle, such as an immersion nozzle, to which the refractory product according to the present invention is applied, is not limited to such a cylindrical nozzle, but the refractory product according to the present invention may be applied to any other type of nozzle without being limited by shape, i.e., to a nozzle having any of various shapes, such as a flat shape, an elliptical shape, and a funnel shape (funnel shape with an enlarged-diameter upper portion), which is mainly used for thin-slab casting, as shown in, e.g., FIG. 2(b).

FIG. 2(c) shows an example of an immersion nozzle having a function of injecting gas into molten steel from a part of an inner bore section (inner wall) of the immersion nozzle in FIG. 2(a). In this example, a refractory product 20G having high gas permeability (hereinafter referred to as "gas-permeable refractory product") is disposed in a part of the inner bore section. The material of the gas-permeable refractory product 20G may be a commonly-used alumina-graphite gas-permeable refractory material, or may be a material obtained by increasing porosity, air permeability, or the like, while maintaining the refractory composition of the present invention. It should be noted that the reference sign 20S in FIG. 2(c) denotes a space serving as a gas passage path, and also serving as a gas accumulation chamber.

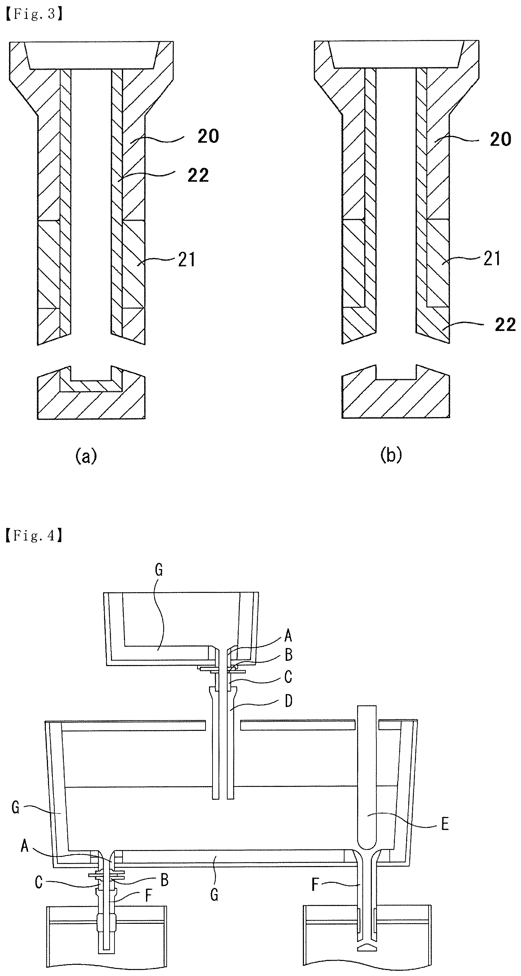

FIG. 3 shows an example of an immersion nozzle in which the refractory product 21 according to the present invention is disposed in a part or the entirety of an area of the immersion nozzle to be brought into contact with molten steel, and a layer composed of a refractory product (hard-to-adhere material 22) having a different composition from that of the refractory product 21 according to the present invention is disposed on the inner side of the refractory product 21 to form a multi-layer, wherein the refractory product 21 and the inner layer are integrated together in a state in which they are in direct contact with each other. In production of such a nozzle composed of a multi-layer, based on the aforementioned production method, after partitioning a target area within a CIP molding mold into two void spaces at a position apart from a surface of the nozzle to be brought in contact with molten steel in a radial direction of the nozzle by a given thickness, a mixture for a refractory product different from the refractory product according to the present invention may be filled in one space on the inner side (core rod side) of the partition, and a mixture for the refractory product according to the present invention, etc., may be filled in the other space on the side of a peripheral surfacer of the nozzle. Subsequently, after removing a jig such as a plate used as the partition, the mixtures may be subjected to pressure molding.

Examples of a nozzle for continuous casting, to which the refractory product according to the present invention can be applied or is suitably applied include a tundish nozzle (including an upper nozzle, and an open nozzle), an intermediate nozzle, and a flow rate control nozzle (in particular, an inner bore), in addition to the immersion nozzle.

FIG. 4 shows a configuration example of a facility of continuous casting of steel, wherein an example is illustrated on the left side of FIG. 4 in which a nozzle unit as a molten steel flow path when discharging molten steel from a molten steel vessel is composed of a plurality of nozzles, wherein an immersion nozzle F among the plurality of nozzles is an externally mounted type. The refractory product 21 according to the present invention can be applied not only to the immersion nozzle F but also to any of various nozzles such as an upper nozzle A, a sliding nozzle plate B, a lower nozzle C, and a long nozzle D in the structure composed of a plurality of continuous casting nozzles, wherein it may be disposed in a part or the entirety of an area of the nozzle to be brought into contact with molten steel. It can also be applied to a so-called "insertion type immersion nozzle" (on the right side of FIG. 4) having a structure in which the nozzle unit as a discharge path is integrated, a so-called "open nozzle" which is not immersed in molten steel, etc. Further, it can be applied to a stopper E which is located above the nozzle unit and configured to control the flow rate of molten steel or to open and close the discharge path, or a refractory liner G of a molten steel vessel.

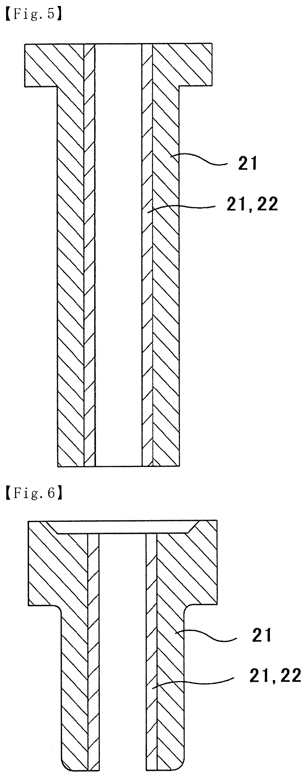

FIGS. 5 and 6 show examples of a long nozzle and a lower nozzle each having an area to be brought into contact with molten steel, wherein the refractory product 21 according to the present invention is disposed in a part or the entirety of the area. In FIGS. 5 and 6, either one or both of a refractory layer on the inner side of the nozzle and a refractory layer on the peripheral side of the nozzle may be composed of the refractory product 21 according to the present invention.

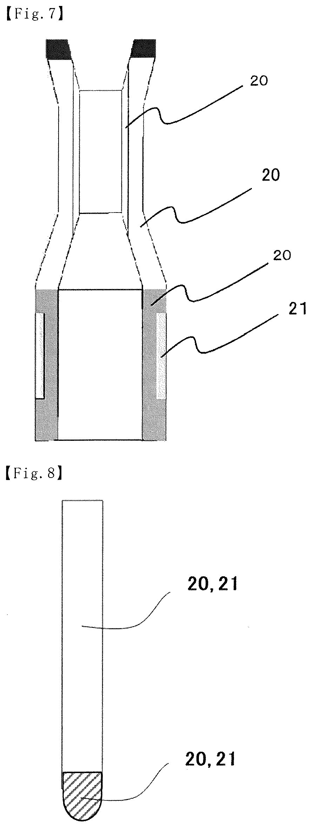

FIG. 7 shows an example of a long nozzle whose powder-line portion is composed of the refractory product 21 according to the present invention. In FIG. 7, the refractory product 21 according to the present invention may also be disposed in other portion than the powder-line portion to provide an immersion nozzle in which the refractory product according to the present invention is disposed in a part or the entirety of an area thereof to be brought into contact with molten steel, in the form of a single layer having a thickness ranging from a surface to be brought into contact with molten steel to a peripheral surface of the nozzle. A nozzle having a single-layer structure can reduce a risk such as breaking caused by thermal expansion difference between two layers, and enables adopting a simple method for production. In production of such a nozzle having a single-layer structure, based on the aforementioned production method, a mixture for the refractory product according to the present invention may be filled as a single layer in a target area within a CIP molding mold.

FIG. 8 shows an example of a long stopper having an area to be brought into contact with molten steel, wherein the refractory product 21 according to the present invention is disposed in a part or the entirety of the area. In FIG. 8, either one or both of a distal end portion and a base end portion other than the distal end portion of the long stopper may be composed of the refractory product 21 according to the present invention.

### EXAMPLES

The following Tables 1 to 6 show a raw material composition and evaluation results of each of Inventive Examples and Comparative Examples. Although the "volume percent of the refractory particles" in each Table is a volume percent calculated based on the raw material composition, this volume percent will be maintained in a resulting refractory product. That is, the "volume percent of the refractory particles" shown in each Table is the same as the volume percent of refractory particles in each particle size fraction when a remainder after excluding a composition comprised of the free carbon component from a composition of the refractory product is defined as 100% by volume.

A phenol resin as an organic binder was added to the raw material formulation in each example shown in each Table, and a resulting mixture was kneaded and adjusted to a state suitable for molding. The adjusted mixture was molded by cold isostatic pressing (CIP), and then subjected to curing and drying at temperatures of up to 300°C, and then to heat treatment in a non-oxidizing atmosphere at 1000°C, thereby obtaining a refractory product in each example.

The obtained refractory product was subjected to analysis of chemical composition, observation of microstructural states, and an evaluation test.

The analysis of chemical composition was performed by a method based on JIS R2216.

**In** the observation of microstructural states, after impregnating the refractory microstructure of the refractory product with a resin, and forming a mirror-finished surface by mechanical polishing, through microscope observation, an MS value was obtained by the aforementioned method, and the continuity of a void layer was observed.

As the evaluation of the refractory product, apparent porosity, maximum thermal expansion rate at a temperature up to 1500°C, corrosion resistance, and thermal shock resistance were evaluated, and based on the results of these evaluations, the refractory product was comprehensively evaluated.

The apparent porosity was measured by a method based on JIS R2205.

The thermal expansion rate was measured at a temperature up to 1500°C by a method based on JIS R2207-3, to evaluate the maximum thermal expansion rate at a temperature up to 1500°C.

The corrosion resistance was evaluated by a method comprising: immersing a prism-shaped sample (20×20×180 mm) of the refractory product in each example, in a crucible in which synthetic slag with a CaO/SiO₂ mass ratio adjusted to 1.0 floated on a surface of low-carbon steel melted at 1550°C, to have a thickness of about 30 mm, for 60 min; pulling up the sample; then measuring the amount of wear loss at a position of a molten steel-molten slag interface; and comparing the measured amount with a reference value. Specifically, the amount of wear loss of the refractory product in each example was converted into a wear loss index to be determined on the basis of the amount of wear loss in Comparative Example 1 taken as 100, and when a sample had a wear loss index of less than 100, the sample was evaluated to have an effect of solving the technical problem. More specifically, a sample having a wear loss index of 94 or less, a sample having a wear loss index of greater than 94 to less than 100, and a sample having a wear loss index of greater than 100, were evaluated, respectively, as ∘ (excellent), Δ (Good), and × (NG).

The evaluation of thermal shock resistance was performed through a test in which thermal shock is applied to a tubular sample refractory product (outer diameter/inner diameter (inner bore diameter)/height = 130/55/300 mm) by a method configured to pour molten iron at 1600°C into an inner bore of the sample at room temperature. After the test, the sample was cut along a horizontal cross-section with a pitch of 50 mm to check the presence or absence of a crack. A sample in which no crack was observed, a sample in which a microcrack was observed, and a sample in which a crack was observed, were evaluated, respectively, as ∘ (excellent), Δ (Good), and × (NG).

In the comprehensible evaluation, a sample in which: with regard to microstructure states, the MS value was within the scope of the present invention (0.3% to 3%), and the continuity of the void layer was approximately continuous; the apparent porosity was within the scope of the present invention (16% or less); the maximum thermal expansion rate at a temperature up to 1500°C was within the scope of the present invention (0.6% or less); the evaluation of corrosion resistance was ∘; and the evaluation of thermal shock resistance was ∘, a sample in which: with regard to microstructure states, the MS value was within the scope of the present invention (0.3% to 3%), and the continuity of the void layer was approximately continuous; the apparent porosity was within the scope of the present invention (16% or less); the maximum thermal expansion rate at a temperature up to 1500°C was within the scope of the present invention (0.6% or less); and the evaluation of one of corrosion resistance and thermal shock resistance was Δ, and a sample in which: with regard to microstructure states, the continuity of the void layer was partially continuous; the apparent porosity was greater than 16%; the maximum thermal expansion rate at a temperature up to 1500°C was greater than 0.6%; the evaluation of corrosion resistance was ×; or the evaluation of thermal shock resistance was ×, were comprehensively evaluated, respectively, as ∘ (excellent), Δ (Good), and × (NG).

**[TABLE 1]**

| | | | | Comparative Example 1 | Inventive Example 1 | Inventive Example 2 | Inventive Example 3 | Inventive Example 4 | Inventive Example 5 | Comparative Example 2 |
|---|---|---|---|---|---|---|---|---|---|---|
| Volume Percent of Refractory Particles /volume% | | Coarse fraction | Greater than 1mm to 3mm | | | | | | | |
| | | | Greater than 0.3mm to 1mm | 10 | 10 | 10 | 10 | 10 | 10 | 10 |
| | | Fine fraction | 0.045mm or less | 15 | 15 | 15 | 15 | 15 | 15 | 15 |
| | | Medium fraction | Greater than 0.045mm to 0.3mm | 75 | 75 | 75 | 75 | 75 | 75 | 75 |
| Raw Material Composition/mass% | | Zirconia raw material | | 95,2 | 93,5 | 91,8 | 89,8 | 87,8 | 85,7 | 83,7 |
| | | Graphite | | 4,8 | 6,5 | 8,2 | 10,2 | 12,2 | 14,3 | 16,3 |
| Binder/mass% (with respect to and in addition to100 mass%) | | Phenol resin (solid resin content) | | 2,4 | 3,3 | 4,0 | 4,0 | 4,0 | 4,0 | 4,0 |
| Chemical Component/mass% | | FC | | 6,0 | 8,0 | 10,0 | 12,0 | 14,0 | 16,0 | 18,0 |
| | | ZrO₂ | | 94,0 | 92,0 | 90,0 | 88,0 | 86,0 | 84,0 | 82,0 |
| Microstructural State | | MS value/% | | - | 0,3 | 0,5 | 1,2 | 1,4 | 1,5 | 1,9 |
| | | Continuity of void layer | | partially continuous | approximately continuous | approximately continuous | approximately continuous | approximately continuous | approximately continuous | approximately continuous |
| Apparent Porosity/% | | | | 17,0 | 16,0 | 15,1 | 14,9 | 15,1 | 15,4 | 16,0 |
| Maximum Thermal Expansion Rate at Temperature up to 1500°C | | | | 0,68 | 0,55 | 0,48 | 0,46 | 0,45 | 0,43 | 0,43 |
| Corrosion Resistance | | | | × | ○ | ○ | ○ | ○ | Δ | × |
| Thermal Shock Resistance | | | | × | Δ | ○ | ○ | ○ | ○ | ○ |
| Comprehensive Evaluation | | | | × | Δ | ○ | ○ | ○ | Δ | × |

In Table 1, Inventive Examples 1 to 5, in which the content of a free carbon component (hereinafter referred to as "FC") in the refractory product is different from each other, but is within the scope of the present invention, had low apparent porosity and excellent corrosion resistance, and also had excellent thermal shock resistance. Thus, they were comprehensively evaluated as ∘ (excellent) or Δ (good), i.e., had good results. Among them, Inventive Examples 2 to 4, in which the content of FC is in a preferable range of 10% by mass to 14% by mass, were comprehensively evaluated as ∘ (excellent), i.e., had a particularly good result.

In contrast, Comparative Example 1, in which the content of FC is less than the lower limit of the present invention, failed to form a three-dimensionally continuous carbonaceous matrix in the refractory microstructure, so that the continuity of the void layer around the coarse particles was impaired and the void layer became "partially continuous". Thus, a sufficient expansion lowering effect was not obtained, resulting in high expansion and deteriorated thermal shock resistance. Moreover, due to a formability problem, a dense refractory product could not be obtained, and corrosion resistance was also deteriorated. On the other hand, Comparative Example 2, in which the content of FC is greater than the upper limit of the present invention, had deteriorated corrosion resistance.

**[TABLE 2]**

| | | | | Comparative Example 3 | Inventive Example 6 | Inventive Example 3 | Inventive Example 7 | Inventive Example 8 | Inventive Example 9 |
|---|---|---|---|---|---|---|---|---|---|
| Volume Percent of Refractory Particles /volume% | | Coarse fraction | Greater than 1mm to 3mm | | | | | 10 | |
| | | | Greater than 0.3mm to 1mm | 2 | 5 | 10 | 20 | 30 | 60 |
| | | Fine fraction | 0.045mm or less | 15 | 15 | 15 | 15 | 15 | 15 |
| | | Medium fraction | Greater than 0.045mm to 0.3mm | 83 | 80 | 75 | 65 | 45 | 25 |
| Raw Material Composition/mass% | | Zirconia raw material | | 89,8 | 89,8 | 89,8 | 89,8 | 89,8 | 89,8 |
| | | Graphite | | 10,2 | 10,2 | 10,2 | 10,2 | 10,2 | 10,2 |
| Binder/mass% (with respect to and in addition to 100 mass%) | | Phenol resin (solid resin content) | | 4,0 | 4,0 | 4,0 | 4,0 | 4,0 | 4,0 |
| Chemical Component/mass% | | FC | | 12,0 | 12,0 | 12,0 | 12,0 | 12,0 | 12,0 |
| | | ZrO₂ | | 88,0 | 88,0 | 88,0 | 88,0 | 88,0 | 88,0 |
| Microstructural State | | MS value/% | | 0,2 | 0,3 | 1,2 | 1,6 | 2,1 | 2,6 |
| | | Continuity of void layer | | approximately continuous | approximately continuous | approximately continuous | approximately continuous | approximately continuous | approximately continuous |
| Apparent Porosity/% | | | | 15,9 | 15,4 | 14,9 | 14,0 | 14,1 | 13,9 |
| Maximum Thermal Expansion Rate at Temperature up to 1500°C/% | | | | 0,63 | 0,56 | 0,46 | 0,42 | 0,41 | 0,40 |
| Corrosion Resistance | | | | Δ | Δ | ○ | ○ | ○ | ○ |
| Thermal Shock Resistance | | | | × | Δ | ○ | ○ | ○ | ○ |
| Comprehensive Evaluation | | | | × | Δ | ○ | ○ | ○ | ○ |

In Table 2, Inventive Examples 6, 3 and 7 to 9, in which the volume percent of coarse-fraction refractory particles is varied, but is within the scope of the present invention, were comprehensively evaluated as ∘ (excellent) or Δ (good), i.e., had good results. Among them, Inventive Example 6, in which the volume percent of coarse-fraction refractory particles is 5% by volume which is the lower limit of the present invention, had a higher expansion property, resulting in being inferior in thermal shock resistance, as compared to other Inventive Examples in which the volume percent of coarse-fraction refractory particles is 10% by volume or more. Further, Inventive Example 6 had a higher apparent porosity, resulting in being inferior in corrosion resistance, as compared to other Inventive Examples.

On the other hand, Comparative Example 3, in which the volume percent of coarse-fraction refractory particles is less than the lower limit of the present invention, had a refractory microstructure in which refractory particles are present continuously, as a result of an increase in the number of refractory particles in the refractory product, and thus the MS value was less than the lower limit of the present invention although the continuity of the void layer was "approximately continuous". This resulted in high expansion and deteriorated thermal shock resistance.

**[TABLE 3]**

| | | | | Comparative Example 4 | Inventive Example 10 | Inventive Example 11 | Inventive Example 3 | Inventive Example 12 | Inventive Example 13 | Inventive Example 14 | Comparative Example 5 |
|---|---|---|---|---|---|---|---|---|---|---|---|
| Volume Percent of Refractory Particles /volume% | | Coarse fraction | Greater than 1mm to 3mm | | | | | | | | |
| | | | Greater than 0.3mm to 1mm | 10 | 10 | 10 | 10 | 10 | 10 | 10 | 10 |
| | | Fine fraction | 0.045mm or less | 3 | 5 | 10 | 15 | 20 | 30 | 40 | 45 |
| | | Medium fraction | Greater than 0.045mm to 0.3mm | 87 | 85 | 80 | 75 | 70 | 60 | 50 | 45 |
| Raw Material Composition/mass% | | Zirconia raw material | | 89,8 | 89,8 | 89,8 | 89, 8 | 89,8 | 89,8 | 89,8 | 89,8 |
| | | Graphite | | 10,2 | 10,2 | 10,2 | 10, 2 | 10,2 | 10,2 | 10,2 | 10,2 |
| Binder/mass% (with respect to and in addition to 100 mass%) | | Phenol resin (solid resin content) | | 4,0 | 4,0 | 4,0 | 4,0 | 4,0 | 4,0 | 4,0 | 4,0 |
| Chemical Component/mass% | | FC | | 12,0 | 12,0 | 12,0 | 12, 0 | 12,0 | 12,0 | 12,0 | 12,0 |
| | | ZrO₂ | | 88,0 | 88,0 | 88,0 | 88,0 | 88,0 | 88,0 | 88,0 | 88,0 |
| Microstructural State | | MS value/% | | 2,7 | 2,6 | 1,5 | 1,2 | 0,5 | 0,3 | 0,3 | 0,2 |
| | | Continuity of void layer | | approximately continuous | approximately continuous | approximately continuous | approximately continuous | approximately continuous | approximately continuous | approximately continuous | approximately continuous |
| Apparent Porosity/% | | | | 16,3 | 15,8 | 15,2 | 14,9 | 14,9 | 15,6 | 15,9 | 16,2 |
| Maximum Thermal Expansion Rate at Temperature up to 1500°C/% | | | | 0,40 | 0,40 | 0,42 | 0,46 | 0,50 | 0,53 | 0,56 | 0,61 |
| Corrosion Resistance | | | | × | Δ | ○ | ○ | ○ | ○ | Δ | × |
| Thermal Shock Resistance | | | | ○ | ○ | ○ | ○ | ○ | ○ | ○ | × |
| Comprehensive Evaluation | | | | × | Δ | ○ | ○ | ○ | ○ | Δ | × |

In Table 3, Inventive Examples 10, 11, 3, and 12 to 14, in which the volume percent of fine-fraction refractory particles is varied, but is within the scope of the present invention, were comprehensively evaluated as ∘ (excellent) or Δ (good), i.e., had good results. Among them, Inventive Examples 11, 3, 12, and 13, in which the volume percent of fine-fraction refractory particles is in a preferable range of 10% by volume to 30% by volume, were comprehensively evaluated as ∘ (excellent), i.e., had particularly good results.

In contrast, Comparative Example 4, in which the volume percent of fine-fraction refractory particles is less than the lower limit of the present invention, had deteriorated corrosion resistance. On the other hand, Comparative Example 5, in which the volume percent of fine-fraction refractory particles is greater than the upper limit of the present invention, had a refractory microstructure in which refractory particles are present continuously, as a result of an increase in the number of refractory particles in the refractory product, and thus the MS value was less than the lower limit of the present invention although the continuity of the void layer was "approximately continuous". This resulted in high expansion and deteriorated thermal shock resistance. Moreover, due to a formability problem, a dense refractory product could not be obtained, and corrosion resistance was also deteriorated.

**[TABLE 4]**

| | | | | Inventive Example 3 | Inventive Example 15 | Inventive Example 16 | Inventive Example 17 | Inventive Example 18 |
|---|---|---|---|---|---|---|---|---|
| Volume Percent of Refractory Particles /volume% | | Coarse fraction | Greater than 1mm to 3mm | | | | | |
| | | | Greater than 0.3mm to 1mm | 10 | 10 | 10 | 10 | 10 |
| | | Fine fraction | 0.045mm or less | 15 | 15 | 15 | 15 | 15 |
| | | Medium fraction | Greater than 0.045mm to 0.3mm | 75 | 75 | 75 | 75 | 75 |
| Raw Material Composition/mass% | | Zirconia raw material | | 89,8 | 89,8 | 89,8 | 89,8 | 89,8 |
| | | Graphite | | 10,2 | 10,2 | 10,2 | 10,2 | 10,2 |
| Binder/mass% (with respect to and in addition to 100 mass%) | | Phenol resin (solid resin content) | | 4,0 | 4,0 | 4,0 | 4,0 | 4,0 |
| Chemical Component/mass% | | FC | | 12,0 | 12,0 | 12,0 | 12,0 | 12,0 |
| | | ZrO₂ | | 88,0 | 89,8 | 88,0 | 88,0 | 88,0 |
| Microstructural State | | MS value/% | | 1,2 | 1,3 | 1,2 | 1,6 | 1,5 |
| | | Continuity of void layer | | approximately continuous | approximately continuous | approximately continuous | approximately continuous | approximately continuous |
| Apparent Porosity/% | | | | 14,9 | 15,2 | 14,8 | 14,8 | 14,9 |
| Maximum Thermal Expansion Rate at Temperature up to 1500°C/% | | | | 0,46 | 0,48 | 0,47 | 0,43 | 0,44 |
| Corrosion Resistance | | | | ○ | Δ | Δ | ○ | ○ |
| Thermal Shock Resistance | | | | ○ | ○ | ○ | ○ | ○ |
| Comprehensive Evaluation | | | | ○ | Δ | Δ | ○ | ○ |

In Table 4, Inventive Examples 3, and 15 to 18 are examples in which the type of zirconia raw material is varied. A zirconia raw material used in each example is as follows.
- Inventive Example 3: partially stabilized zirconia containing 4% by mass of CaO (the same is applied to each example in Tables 1 to 3, and the below-mentioned Tables 5 and 6)
- Inventive Example 15: 3: partially stabilized zirconia containing 6% by mass of CaO
- Inventive Example 16: partially stabilized zirconia containing 6% by mass of MgO
- Inventive Example 17: partially stabilized zirconia containing 8% by mass of Y₂O₃
- Inventive Example 18: 90% by mass of partially stabilized zirconia containing 4% by mass of CaO and 10% by mass of unstabilized zirconia are contained in 100% by mass of zirconia raw material

As mentioned above, in the refractory product according to the present invention, the content of the stabilizing component such as CaO, MgO, and Y₂O₃ is included in the content of the zirconia component. Thus, in each table, the content of the stabilizing component such as CaO, MgO, and Y₂O₃ is combined in the content of the zirconia component (ZrO₂).

Inventive Examples 3 and 15 to 18, each of which are within the scope of the present invention, were comprehensively evaluated as ○ (excellent) or Δ (good), i.e., had good results.

In Inventive Examples 15 and 16 each containing CaO or MgO in the zirconia component (ZrO₂), since the amount of ZrO₂ after excluding CaO or MgO is reduced, the evaluation of corrosion resistance was Δ (good). In Inventive Example 17, since Y₂O₃ has high corrosion resistance, the evaluation of corrosion resistance was∘ (excellent).

**[TABLE 5]**

| | | | Inventive Example 19 | Inventive Example 20 |
|---|---|---|---|---|
| Volume Percent of Refractory Particles /volume% | Coarse fraction | Greater than 1mm to 3mm | | |
| | | Greater than 0.3mm to 1mm | 10 | 10 |
| | Fine fraction | 0.045mm or less | 15 | 15 |
| | Medium fraction | Greater than 0.045mm to 0.3mm | 75 | 75 |
| Raw Material Composition/mass% | Zirconia raw material | | 89,8 | 89,8 |
| | Graphite | | 5,2 | 5,2 |
| | Carbon fiber | | 5,0 | 5,0 |
| Binder/mass% (with respect to and in addition to 100 mass%) | Phenol resin (solid resin content) | | 4,0 | 4,0 |
| | Aspect ratio of carbon fiber | | 50,0 | 210,0 |
| Chemical Component/mass% | FC | | 12,0 | 12,0 |
| | ZrO₂ | | 88,0 | 88,0 |
| Microstructural State | MS value/% | | 0,6 | 0,5 |
| | Continuity of void layer | | approximately continuous | approximately continuous |
| Apparent Porosity/% | | | 15,7 | 15,8 |
| Maximum Thermal Expansion Rate at Temperature up to 1500°C/% | | | 0,49 | 0,48 |
| Corrosion Resistance | | | ○ | Δ |
| Thermal Shock Resistance | | | ○ | ○ |
| Comprehensive Evaluation | | | ○ | Δ |

Inventive Examples shown in Table 5, each of which contains carbon fibers, were comprehensively evaluated as ∘ (excellent) or Δ (good), i.e., had good results. In particular, Inventive Example 19, in which the aspect ratio of the carbon fibers is 15 to 200, and the content thereof is limited to 5% by mass or less, was comprehensively evaluated as ∘ (excellent), i.e., had particularly good results.

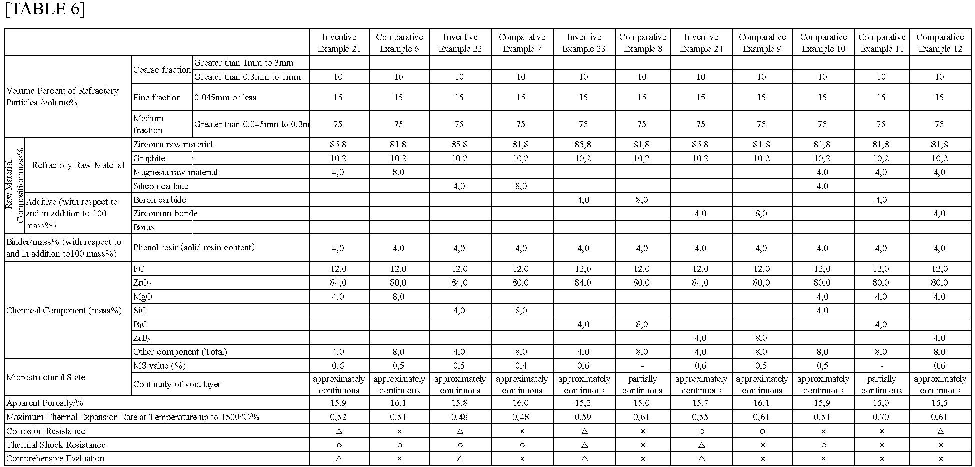

In Table 6, Inventive Examples 21 to 23, each of which contains the "other component", wherein the content (total content) thereof is less than 5% by mass and is within the scope of the present invention, had good results.

In contrast, Comparative Examples 6 to 12, in which the content (total content) of the other component is 5% by mass or more", had deteriorated corrosion resistance. In Comparative Example 8 in which a B₄C component as the other component is contained in an amount of 5% by mass or more, a B₂O₃ component (liquid-phase component) was produced from the B₄C component in large amounts in the course of heat receiving, and the liquid-phase component penetrated into a void layer around each refractory particle. Thus, the continuity of the void layer was impaired and became "partially continuous". This resulted in high expansion and deteriorated thermal shock resistance. In Comparative Example 11 in which a B₄C component and an MgO component as the other component is contained in a total amount of 5% by mass or more, a liquid-phase component was produced in large amounts in the course of heat receiving, and the liquid-phase component penetrated into a void layer around each refractory particle. Thus, the continuity of the void layer was impaired and became "partially continuous". This resulted in high expansion and deteriorated thermal shock resistance. In Comparative Example 12, through a reaction between a B₂O₃ component produced from a ZrB₂ component, and an MgO component, sintering of the entire microstructure was promoted, causing a rise in elastic modulus, and thus deteriorated thermal shock resistance

In Table 6, the "additive" is a boron component source, and an addition amount thereof is shown as an addition amount with respect to and in addition to 100% by mass of the raw material composition which does not include the "additive".

### LIST OF REFERENCE SIGNS

20: body material
21: refractory product of present invention
22: hard-to-adhere material
22G: gas-permeable refractory product
22S: space (gas passage path, gas accumulation chamber)
A: upper nozzle
B: sliding nozzle plate
C: lower nozzle
D: long nozzle
E: long stopper
F: immersion nozzle
G: refractory liner

## Claims

1. A refractory product for continuous casting (21), containing a free carbon component in an amount of 8% by mass to 16% by mass, and a remainder in which a main component is a zirconia component, wherein a content of other component than the free carbon component and the zirconia component is less than 5% by mass in total,
wherein when a remainder after excluding a composition comprised of the free carbon component from a composition of the refractory product (21) is defined as 100% by volume, refractory particles having a particle size of greater than 0.3 mm account for 5% by volume or more, and refractory particles having a particle size of 0.045 mm or less account for 5% by volume to 40% by volume,
and wherein an approximately continuous void layer is present around each of a plurality of coarse particles, at least one of which has a largest particle size among refractory particles in the refractory product (21), the approximately continuous void layer having a similar shape to the coarse particle, wherein a total thickness of the approximately continuous void layer across two positions on an interface between a carbon-containing matrix microstructure and the coarse particle, located on opposed sides of the void layer is in the range of 0.3% to 3% of the particle size of the coarse particle,
and wherein the refractory product (21) has an apparent porosity of 16% or less, and a maximum thermal expansion rate at a temperature up to 1500°C is 0.6% or less,
wherein "approximately continuous void layer" means that the void layer is actually present around the entire periphery of each refractory particle, but a part of the surface of the refractory particle is likely to be in contact with another refractory particle or the carbonaceous matrix during verification in the form of a microscopic observation sample,
wherein the volume of the refractory particles, the total thickness of the approximately continuous void layer, the porosity, and the thermal expansion rate at a temperature up to 1500 °C are determined in accordance with the description.

2. The refractory product for continuous casting (21), as claimed in claim 1, wherein the refractory particles having a particle size of greater than 0.3 mm account for 10% by volume or more, and the refractory particles having a particle size of 0.045 mm or less account for 10% by volume to 30% by volume.

3. The refractory product for continuous casting (21), as claimed in claims 1 or 2, containing, in the matrix microstructure, carbon fibers having an aspect ratio of 15 to 200, a content of the carbon fibers being 5% by mass or less.

4. The refractory product for continuous casting (21), as claimed in any one of claims 1 to 3, wherein the other component is one or more selected from the group consisting of a magnesia component, a silicon carbide component, a boron carbide component, and a zirconium boride component.

5. A refractory member for continuous casting, comprising the refractory product for continuous casting (21) as claimed in any one of claims 1 to 4, wherein the refractory product for continuous casting is disposed in a part or entirety of a portion of the refractory member to be brought into contact with molten steel.

## Patentansprüche

1. Ein feuerfestes Produkt für den Strangguss (21), enthaltend eine freie Kohlenstoffkomponente in einer Menge von 8 Massen-% bis 16 Massen-% und einen Rest, in dem eine Hauptkomponente eine Zirkonoxidkomponente ist, wobei ein Gehalt an anderen Komponenten als der freien Kohlenstoffkomponente und der Zirkonoxidkomponente weniger als 5 Massen-% insgesamt beträgt,
wobei, wenn der Rest nach Ausschluss einer Zusammensetzung, die die freie Kohlenstoffkomponente umfasst, aus der Zusammensetzung des feuerfesten Produkts (21) als 100 Vol.-% definiert wird, feuerfeste Teilchen mit einer Teilchengröße von mehr als 0,3 mm 5 Vol.-% oder mehr ausmachen, und feuerfeste Teilchen mit einer Teilchengröße von 0,045 mm oder weniger 5 Vol.-% bis 40 Vol.-% ausmachen,
und wobei eine annähernd durchgehende Hohlraumschicht um jedes einer Vielzahl von groben Teilchen herum vorliegt, von denen mindestens eines die größte Teilchengröße unter den feuerfesten Teilchen in dem feuerfesten Produkt (21) aufweist, wobei die annähernd durchgehende Hohlraumschicht eine ähnliche Form wie das grobe Teilchen aufweist, wobei eine Gesamtdicke der annähernd durchgehenden Hohlraumschicht über zwei Stellen an einer Grenzfläche zwischen einer kohlenstoffhaltigen Matrixmikrostruktur und dem groben Teilchen, die sich auf gegenüberliegenden Seiten der Hohlraumschicht befinden, im Bereich von 0,3 % bis 3 % der Teilchengröße des groben Teilchens liegt,
und wobei das feuerfeste Produkt (21) eine scheinbare Porosität von 16 % oder weniger aufweist und die maximale Wärmeausdehnungsrate bei einer Temperatur von bis zu 1500 °C 0,6 % oder weniger beträgt,
wobei "nahezu durchgehende Hohlraumschicht" bedeutet, dass die Hohlraumschicht tatsächlich um den gesamten Umfang jedes feuerfesten Teilchens herum vorliegt, aber ein Teil der Oberfläche des feuerfesten Teilchens wahrscheinlich mit einem anderen feuerfesten Teilchen oder der kohlenstoffhaltigen Matrix während der Überprüfung in Form einer mikroskopischen Untersuchungsprobe in Kontakt ist,
wobei das Volumen der feuerfesten Teilchen, die Gesamtdicke der annähernd durchgehenden Hohlraumschicht, die Porosität und die Wärmeausdehnungsrate bei einer Temperatur von bis zu 1500 °C gemäß der Beschreibung bestimmt werden.

2. Das feuerfeste Produkt für den Strangguss (21) gemäß Anspruch 1, wobei die feuerfesten Teilchen mit einer Teilchengröße von mehr als 0,3 mm 10 Vol.-% oder mehr ausmachen und die feuerfesten Teilchen mit einer Teilchengröße von 0,045 mm oder weniger 10 Vol.-% bis 30 Vol.-% ausmachen.

3. Das feuerfeste Produkt für den Strangguss (21) gemäß Anspruch 1 oder 2, das in der Matrixmikrostruktur Kohlenstofffasern mit einem Seitenverhältnis von 15 bis 200 enthält, wobei ein Gehalt an Kohlenstofffasern 5 Massen-% oder weniger beträgt.

4. Das feuerfeste Produkt für den Strangguss (21) gemäß einem der Ansprüche 1 bis 3, wobei die weitere Komponente eine oder mehrere ist, ausgewählt aus der Gruppe bestehend aus einer Magnesia-Komponente, einer Siliziumkarbid-Komponente, einer Borcarbid-Komponente und einer Zirkoniumborid-Komponente.

5. Ein feuerfestes Element für den Strangguss, umfassend das feuerfeste Produkt für den Strangguss (21) gemäß einem der Ansprüche 1 bis 4, wobei das feuerfeste Produkt für den Strangguss in einem Teil oder in der Gesamtheit eines Abschnitts des feuerfesten Elements angeordnet ist, der mit geschmolzenem Stahl in Kontakt gebracht werden soll.

## Revendications

1. Produit réfractaire pour coulée continue (21), contenant un composant de carbone libre en une quantité de 8 % en masse à 16 % en masse, et un reste dans lequel le composant principal est un composant de zircone, dans lequel la teneur en composant autre que le composant de carbone libre et le composant de zircone est inférieure à 5 % en masse au total,
dans lequel, quand le reste après exclusion d'une composition constituée du composant carbone libre dans la composition du produit réfractaire (21) est défini comme étant de 100 % en volume, les particules réfractaires ayant une granulométrie supérieure à 0,3 mm représentent 5 % en volume ou plus, et les particules réfractaires ayant une granulométrie de 0,045 mm ou moins représentent 5 % en volume à 40 % en volume,
et dans lequel une couche de vide approximativement continue est présente autour de chacune parmi une pluralité de particules grossières, dont au moins une a une granulométrie maximale parmi les particules réfractaires dans le produit réfractaire (21), la couche de vide approximativement continue ayant une forme similaire à celle de la particule grossière, dans lequel l'épaisseur totale de la couche de vide approximativement continue entre deux positions sur une interface entre la microstructure de matrice contenant du carbone et la particule grossière, se trouvant sur des côtés opposés de la couche de vide, est située dans la plage allant de 0,3 % à 3 % de la granulométrie de la particule grossière,
et dans lequel le produit réfractaire (21) a une porosité apparente de 16 % ou moins, et le taux de dilatation thermique maximal à une température allant jusqu'à 1500 °C est de 0,6 % ou moins,
dans lequel "couche de vide approximativement continue" signifie que la couche de vide est bien présente autour de toute la périphérie de chaque particule réfractaire, mais une partie de la surface de la particule réfractaire est susceptible d'être en contact avec une autre particule réfractaire ou la matrice carbonée durant une vérification sous la forme d'un échantillon d'observation au microscope,
dans lequel le volume des particules réfractaires, l'épaisseur totale de la couche de vide approximativement continue, la porosité, et le taux de dilatation thermique à une température allant jusqu'à 1500 °C sont déterminés conformément à la description.

2. Produit réfractaire pour coulée continue (21) selon la revendication 1, dans lequel les particules réfractaires ayant une granulométrie supérieure à 0,3 mm représentent 10 % en volume ou plus, et les particules réfractaires ayant une granulométrie de 0,045 mm ou moins représentent de 10 % en volume à 30 % en volume.

3. Produit réfractaire pour coulée continue (21) selon la revendication 1 ou 2, contenant, dans la microstructure de la matrice, des fibres de carbone ayant un rapport d'aspect de 15 à 200, la teneur en fibres de carbone étant de 5 % en masse ou moins.

4. Produit réfractaire pour coulée continue (21) selon l'une quelconque des revendications 1 à 3, dans lequel l'autre composant est un ou plusieurs choisis dans le groupe constitué par un composant de magnésie, un composant de carbure de silicium, un composant de carbure de bore, et un composant de borure de zirconium.

5. Elément réfractaire pour coulée continue, comprenant le produit réfractaire pour coulée continue (21) selon l'une quelconque des revendications 1 à 4, dans lequel le produit réfractaire pour coulée continue est disposé dans une partie ou dans la totalité d'une portion de l'élément réfractaire devant venir en contact avec de l'acier fondu.
